Europäisches Patentamt

European Patent Office

Office européen des brevets

(11) Publication number: **0 160 511**
**B1**

## EUROPEAN PATENT SPECIFICATION

(45) Date of publication of patent specification: **27.12.89**

(51) Int. Cl.⁴: **G 01 G 19/32**

(21) Application number: **85302886.8**

(22) Date of filing: **24.04.85**

(54) Combinatorial weighing method.

(30) Priority: **25.04.84 JP 83485/84**
**25.04.84 JP 83486/84**

(43) Date of publication of application:
**06.11.85 Bulletin 85/45**

(45) Publication of the grant of the patent:
**27.12.89 Bulletin 89/52**

(84) Designated Contracting States:
**DE FR GB IT**

(56) References cited:
**EP-A-0 074 773**
**GB-A-2 095 934**

(73) Proprietor: **ISHIDA SCALES MFG. CO. LTD.**
**44, Shogoin Sannou-cho Sakyo-ku**
**Kyoto-shi Kyoto (JP)**

(72) Inventor: **Yamada, Seiji**
**Daisanyutakasou 36 44-3, Misasagibessho-cho**
**Yamashina-ku Kyoto-shi Kyoto (JP)**

(74) Representative: **Fane, Christopher Robin King**
**et al**
**HASELTINE LAKE & CO. Hazlitt House 28**
**Southampton Buildings Chancery Lane**
**London, WC2A 1AT (GB)**

Courier Press, Leamington Spa, England.

## Description

This invention relates to combinatorial weighing apparatus, of the type which performs a combinatorial calculation to form combinations of weight values. indicative of the weights of articles weighed by a plurality of weighing machines, selects a weight value combination having an acceptable total weight with respect to a preselected target weight, and discharges the articles from the machines corresponding to the selected combination.

In greater detail, an example of such an apparatus includes a plurality of weighing machines, into which articles are introduced to be weighed thereby, and a calculation and control unit constituted by a microcomputer or the like which is provided by the weighing machines with data items indicating the measured weight values. The calculation and control unit effectively forms different combinations of the weight values, calculates the total weight of each combination, compares each total weight value with a preselected target weight, selects the most acceptable combination (sometimes referred to as the "optimum" combination) the total weight value whereof is equal or closest to the target weight and within an allowable range defined by upper and lower weight limit values, and causes those weighing machines that have provided the weight values belonging to the selected combination to discharge their articles.

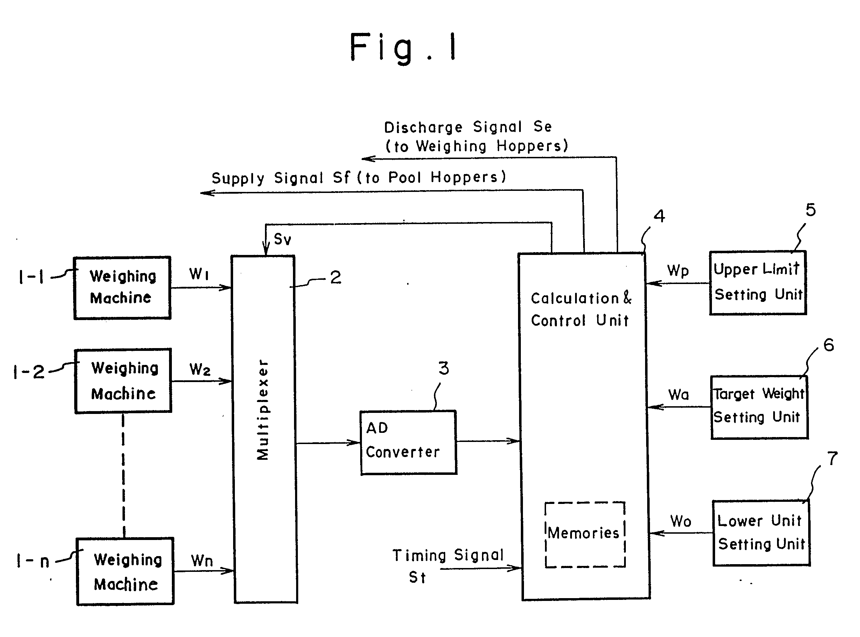

Fig. 1 of the accompanying drawings is a block diagram illustrating an example of such a combinatorial weighing apparatus. The apparatus includes a plurality of weighing machines 1-1, 1-2,... 1-n, each of which has a weight sensor (not shown) for weighing articles with which the weighing machines are supplied. The weighing machines produce weight data items W1, W2,... Wn, respectively, indicative of the weights measured thereby. Each item of weight data is an analog value. It should be noted that each weighing machine also includes a weighing hopper (not shown) that actually receives the articles to be weighed, and has an associated pool hopper (not shown) for replenishing the weighing hopper, as will be set forth below. The weight data items W1, W2,...Wn are fed into a multiplexer 2, constituted by analog switches or the like, adapted to deliver the items of weight data one at a time in sequential fashion to an AD converter 3 in response to a changeover signal Sv received from a calculation and control unit 4. The AD converter 3 converts the weight data W1, W2,... Wn received from the multiplexer 2 into digital values and feeds the digital weight data into the calculation and control unit 4. The unit 4 is composed of a microcomputer for performing a combinatorial calculation on the basis of the weight data and includes a processor, various memories such as a program memory and working memory, and input/output interface circuitry. An upper limit weight setting unit 5, a target weight setting unit 6, and a lower limit weight setting unit 7 respectively provide the calculation control unit with an upper limit weight value Wp, a preselected target weight Wa, and a lower limit weight value Wo.

In operation, a packing machine, not shown, applies a timing signal St to the calculation and control unit 4 when the packing machine is ready to pack a batch of weighed articles. The unit 4 responds by delivering a changeover signal Sv to the multiplexer 2, which responds in turn by sequentially supplying the AD converter 3 with the weight data W1, W2,... Wn indicative of the weights of the articles measured by the respective weighing machines 1-1, 1-2,... 1-n. The AD converter 3 converts the analog weight data supplied thereto into digital signals and feeds these signals into the calculation and control unit 4. The unit 4, in response to a signal from its internal program memory, successively generates $2^n-1$ combinations of weight values (n being the number of weighing machines employed) on the basis of the weight data from the AD converter 3, and calculates the total weight of each combination. The unit 4 also compares the total weight value of each combination with the preselected value Wa from the target weight setting unit 6, selects an acceptable combination, such as the aforementioned optimum combination the total weight value whereof is equal or closest to Wa and between the upper and lower weight limits values Wp and Wo from the upper and lower limit weight value setting units 5 and 7 respectively, and applies a discharge signal Se to the weighing hoppers of the weighing machines corresponding to the selected combination, thereby causing these weighing hoppers to discharge their articles. The calculation and control unit 4 then applies a supply signal Sf to the pool hoppers associated respectively with the weighing machines that have just discharged their articles, causing these pool hoppers to dump their articles into the underlying weighing hoppers of those weighing machines. It should be noted that the lower limit weight value setting unit 7 may be omitted from the illustrated arrangement so that the articles may be discharged from the weighing machines using solely the upper limit value. This method is preferred when weighing out commodities, in which case it will be appreciated that the target weight itself constitutes the allowable lower limit.

There are occasions where an acceptable combination cannot be obtained. A known practice in such an eventuality is to supply prescribed weighing machines with additional articles, for example as described in GB-A-2 095 934, in order to raise the precision of the combinatorial weighing operation. This supplementary feed of articles may be carried out to every weighing machine that provides a weight data item indicative of a weight value less than a preselected fixed value, for example, or to just a prescribed number of weighing machines whose indicated weight values are small in comparison with those of the other machines. Changeover between these two supplementary feed modes could be performed by an operator who, relying upon his experience, would operate a changeover switch to select the particular mode. Such a changeover switch, however, would call for undesirable complexity in the construction and operation of a combinatorial weighing apparatus.

According to one aspect of the present invention there is provided a combinatorial weighing apparatus including a plurality of weighing machines, for receiving respective individual quantities of articles to be weighed, and having calculation and control means connected to cooperate with the weighing machines to carry out automatically a combinatorial weighing cycle, for weighing out a desired batch of such articles, which weighing cycle comprises the steps of:

combining weight data items, provided respectively by the weighing machines and indicative of the weights of the individual quantities held respectively in the weighing machines at the start of the cycle, to find the respective total combined weights of articles held by different combinations of the weighing machines; and

ascertaining whether there is one of the said total combined weights that constitutes an acceptable total, within a preselected allowable value range including a preselected target weight, and (i) if so, discharging the articles from the weighing machines of the combination holding the said acceptable total, thereby to provide the desired batch, but (ii) if not, causing some of the weighing machines, the respective data items from which indicate that the individual quantities therein are each lower in weight than the individual quantities in other weighing machines of the plurality, to be supplied with additional articles, and then restarting the weighing cycle;

the apparatus being such that if none of the said total combined weights constitutes such an acceptable total the calculation and control means are caused automatically to compare the overall total weight of the articles, in all the weighing machines of the said plurality, with a predetermined multiple of the said preselected target weight and to decide, in dependence on the result of this comparison, the number of machines to be supplied with the additional articles prior to the restarting of the weighing cycle.

A known combinatorial weighing apparatus operates on the premise that the rate of supply of articles to it from a commodity production system located upstream is approximately constant. It is therefore desirable for the weighing apparatus to have an article processing capability slightly higher than that actually needed to process the articles with which it is supplied. In order to ensure that such a weighing apparatus will have an appropriate processing capability, a choice can be made between two general types of apparatus. One is a high-speed, low-capacity type of combinatorial weighing apparatus for dealing with a target weight value that is comparatively small. This type of apparatus executes so-called high-speed low-capacity processing and performs combinatorial weighing cycles at a high rate of repetition. The other is a low-speed high-capacity type of combinatorial weighing apparatus for dealing with a target weight value that is comparatively large. This apparatus executes so-called low-speed high-capacity processing and performs combinatorial weighing at relatively low speed. The two types of apparatus differ in terms of the number of weighing machines and the capacity of the weighing hoppers, for suitably adjusting the amount of articles supplied per weighing machine by distributive feed.

If a production schedule makes it necessary to use a high-speed low-capacity combinatorial weighing apparatus to execute low-speed high-capacity processing, the quantity of articles supplied to each weighing machine will be so small, assuming that the only change made to the operating conditions is to increase the preselected target weight value, that an undesirably large number of the weighing machines will be needed to make up an acceptable ("optimum") combination.

An alternative way of operating such a combinatorial weighing apparatus is to divide a single target weight value in half perform combinatorial weighing twice, i.e. in two cycles, one for each half of the target weight value, and discharge the selected articles at the end of each of the two cycles to arrive at a total weight value which is equivalent to the target weight value, for example as proposed in EP-A2-74 773. This is sometimes known as multiple weighing processing. Nevertheless, this method still necessitates modification of the basic high-speed low-capacity combinatorial calculation program, and it may also be necessary to modify circuitry for allowing a packing machine, connected to the weighing apparatus, to perform a single packing and sealing operation only after receiving the discharge signal from the weighing apparatus twice. A requirement for such modifications can be very inconvenient when dealing with unexpected or sudden changes in the production schedule.

Though it is sometimes possible to adapt the prior high-speed low-capacity type combinatorial weighing apparatus so as to increase the quantity of articles supplied to each weighing machine sufficiently to enable a desired batch of the articles to be selected and discharged satisfactorily by means of just a single combinatorial calculation, adjustment of the rate of supply of articles can be troublesome, and a considerable number of unsatisfactory weighing cycles tend to occur before the supply is satisfactorily stabilized. Furthermore, the capacity of the weighing hoppers imposes a limitation upon the amount by which the rate of supply of articles can be increased.

According to a second aspect of the present invention there is provided a combinatorial weighing apparatus including a plurality of weighing machines, for receiving respective individual quantities of articles to be weighed, and having calculation and control means connected to cooperate with the weighing machines to carry out automatically a weighing process, involving one or more combinatorial calculation cycles, for weighing out a batch of such articles of a total weight equal or close to a preselected desired weight, the or each such calculation cycle comprising the steps of:

combining weight data items, provided respectively by weighing machines of the said plurality and indicative of the weights of the individual quantities held respectively in those weighing machines at the start of the cycle, to find the respective total combined weights of articles held by different combinations of the weighing machines; and

if one of the said total combined weights constitutes an acceptable total, within a preselected allowable value range including a preset target weight, identifying the combination of machines holding that total, the contents of which machines are to be discharged to form at least part of the said batch;

the apparatus being such that the calculation and control means are caused automatically at the commencement of the said weighing process to compare the overall total weight of the articles, in all the weighing machines of the said plurality, with a predetermined multiple of the said preselected desired weight and then to decide, in dependence on the result of this comparison, how many such calculation cycles are to be included in the complete weighing process.

Further reference will now be made, by way of example, to the accompanying drawings, in which:

Fig. 1 is a generalized block diagram of a combinatorial weighing apparatus;.

Fig. 2 is a flowchart indicating a processing sequence illustrating the operation of a first combinatorial weighing apparatus embodying basic concepts of the present invention; and

Fig. 3 is a flowchart indicating a processing sequence illustrating the operation of a second combinatorial weighing apparatus embodying basic concepts of the present invention.

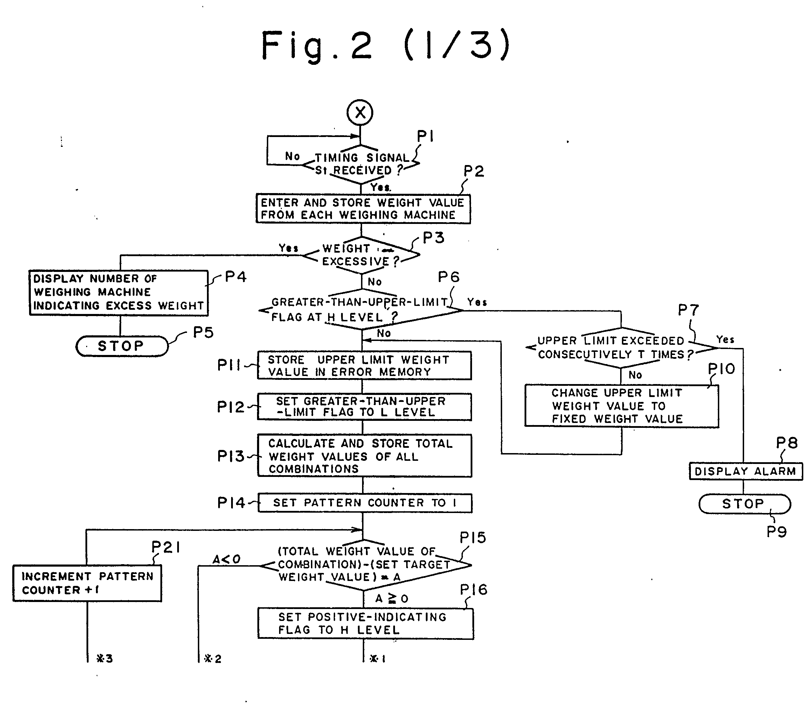

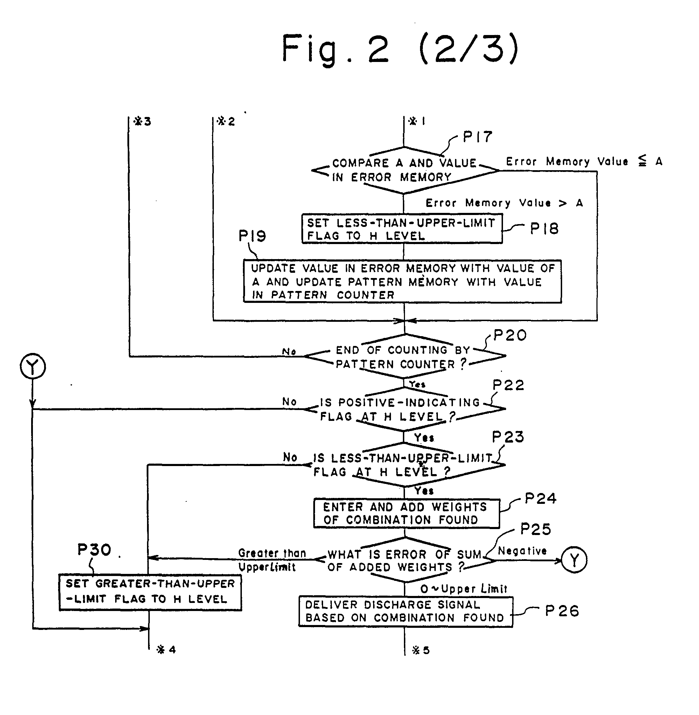

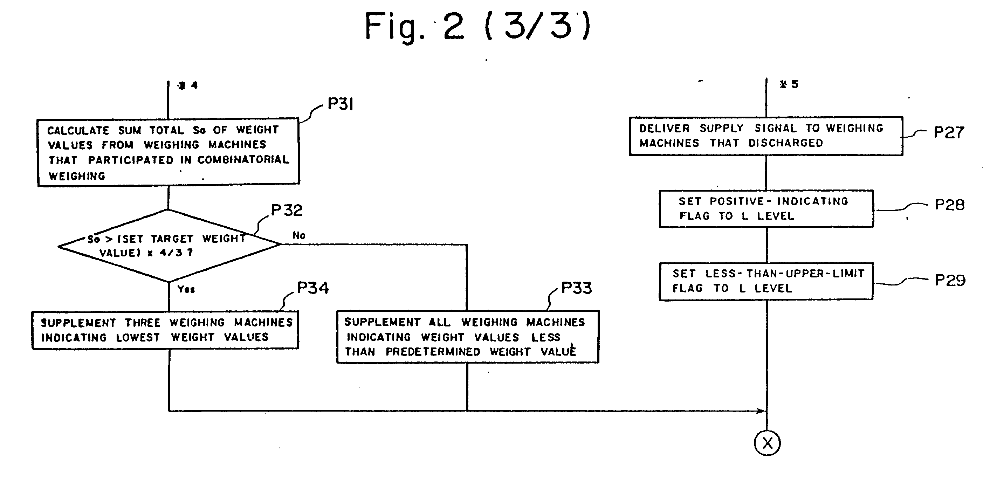

The operation of an apparatus embodying the aforesaid first aspect of the present invention will now be described with reference to Figure 1 and the flowchart of Figure 2.

(1) Upon confirming that a packing machine has supplied it with the timing signal St, the calculation and control unit 4 reads in the weight data items from the weighing machines 1-1, 1-2,... 1-n and stores this data in an internal memory. These operations correspond to steps P1 and P2 of the flowchart. Next, steps P3 through P5 call for the calculation and control unit 4 to render a decision as to whether any of the weighing machines shows an excessively high weight reading, display the number of any such weighing machine on a display device, not shown, and then halt processing.

A reference value B for delimiting an excessively high weight reading can be defined by: B = target weight value + upper limit weight value.

It will be appreciated that the preselected upper limit weight value here is the maximum allowable error, above the target weight value, for an acceptable batch.

However, if such a reference value B would be greater than the normal maximum weighing capacity of each of the weighing machines 1-1, 1-2,... 1-n, that normal maximum weighing capacity should be used as the reference value concerned.

(2) If the decision at the step P3 is that none of the weight readings is excessive, then the program proceeds to a step P6, where the calculation and control unit 4 searches the logic levels of an area of the internal memory for a flag which indicates that the upper limit weight value has been exceeded. The flag will be at a high (i.e. "1") logic level if, in the immediately preceding combinatorial weighing cycle, the total weight of a combination closest to the preselected target weight Wa exceeded the upper limit weight (error) value Wp set in the upper limit setting unit 5; that is, if unsatisfactory results were obtained in the preceding weighing cycle. If the flag is at the high level, then the calculation and control unit 4 checks at a step P7 whether this unsatisfactory condition in which the upper limit value is exceeded has occurred consecutively for a preselected number (T) of weighing cycles. If this is the case, then an alarm is indicated at a step P8 and processing is halted at a step P9. If the decision at the step P7 is that the unsatisfactory weighing operation has not continued for the preselected number of cycles, then the calculation control unit 4 changes the upper limit weight value to a fixed weight value at a step P10. The program then proceeds to a step P11.

(3) The step P11 calls for the calculation and control unit 4 to store the upper limit weight value in an error memory. This is followed by a step P12, at which the above-mentioned flag is set to the low logic level. Next, at a step P13, the calculation and control unit 4 executes a combinatorial operation to compute the total combined weight value of each of the $2^n-1$ different combinations of article weights, n being the number of weighing machines, and stores the total weight values of all combinations. The program proceeds to a step P14, at which the calculation control unit 4 sets a pattern counter to 1, and then to a step P15, where the control unit reads the total weight value of the first combination pattern out of memory, subtracts the preselected target weight value from the total weight value of that combination to calculate a difference value A (A = total weight target weight), and determines whether the condition $A \geq 0$ is satisfied. If it is, a positive-indicating flag in the internal memory is set to the high logic level at a step P16, which is followed by a step P17, in which the difference value A is compared with the value stored in the error memory at the step P11. If the value in the error memory is greater than A, the calculation control unit 4 sets a flag to the high logic level, indicating that the upper limit value has not been exceeded, and updates the error memory to the value of A. The calculation and control unit 4 also updates a pattern memory with the value of the count in the pattern counter. These steps are steps P18 and P19 of the flowchart. Thereafter, the calculation and control unit 4 repeatedly executes steps P15 through P19 and increments the pattern counter, so that the respective total combined weight values of all the combinations are read out and processed in turn, until the pattern counter can count no further (steps P20, P21).

(4) Next, at a step P22, the calculation control unit 4 determines whether the positive-indicating flag is at the high level, indicating that the total weight value of a combination is greater than (or equal to) the set target weight. If the decision here is affirmative, the program proceeds to a step P23; if the P22 decision is negative however, indicating that the total weight of every combination is less than the target weight value, so that the combinations concerned are unsatisfactory, then the program proceeds to a step P31 (described later).

Step P23, executed when the positive-indicating flag is found to be at the high level, calls for the calculation and control unit 4 to determine whether the flat for indicating that the upper limit value has not been exceeded (see step P18) is at the high logic level. If it is high, indicating that the total weight of a combination is less than the upper limit weight value, then the program proceeds to a step P24. If the decision at the step P23 is negative, indicating that the respective total weight values of all combinations are greater than the upper limit weight value, this indicates that the combinations are unsatisfactory and the program proceeds to a step P30.

(5) The step P24, executed when the flag is found to be at the high logic level at the step P23, calls for the calculation and control unit 4 to again read in the weight data items from the weighing machines corresponding to the best combination found (indicated by the contents of the pattern memory) and sum the weight values indicated by this weight data. This is followed by a step P25, at which the calculation and control unit 4 checks the error of the total weight value resulting from the addition process of the step P24. If the error is between zero and the upper limit weight value, the calculation and control unit 4 delivers, at a step P26, the article discharge signal Se to the weighing machines corresponding to the combination found, in response to which these weighing machines discharge their articles. Then, at a step P27, the calculation and control unit 4 provides the weighing machines that have discharged their articles with the supply signal Sf, causing these weighing machines to be replenished with articles to be weighed. The calculation and control unit 4 then sets the positive-indicating flag to the low logic level at a step P28, and at a step P29 sets to the low logic level the flag for indicating that the upper limit weight value has not been exceeded. The program then returns to point X.

(6) If it is found at the step P23 that the flag for indicating that the upper limit weight value has not been exceeded is not at the high level, the calculation and control unit 4 executes the step P30, at which the flag indicating that the upper limit weight value has been exceeded is set to the high logic level, and continues to a step P31, in which the calculation and control unit 4 calculates the overall sum total (So) of the weight values indicated by the respective weight data items of all the n weighing machines that have participated in the combinatorial weighing. This is followed by a step P32, which calls for the calculation and control unit 4 to compare the overall total So with a predetermined multiple (for example 4/3) of the target weight value, and to determine whether the following condition, which serves just as one example, holds:

So > target weight value x 4/3.

If this condition is satisfied, the program proceeds to a step P34, at which a preset number of weighing machines indicating weight values small in comparison with the other weight values are supplied with additional articles. By way of example, three weighing machines indicating the lowest weight values are selected successively, starting from the one whose weight value is the smallest, and these weighing machines only are supplemented with additional articles. In the decision at the step P32 is that the above condition is not satisfied, the program proceeds to a step P33, at which all weighing machines whose weight values are below a preset fixed reference weight value are supplied with additional articles. It will be appreciated that the said fixed reference weight value is preselected so that the number of machines supplied in step P33 will normally be greater than the fixed number supplied in step P34.

Automatic operation in accordance with the flowchart of Fig. 2 can afford precise combinatorial weighing at desirably high speed.

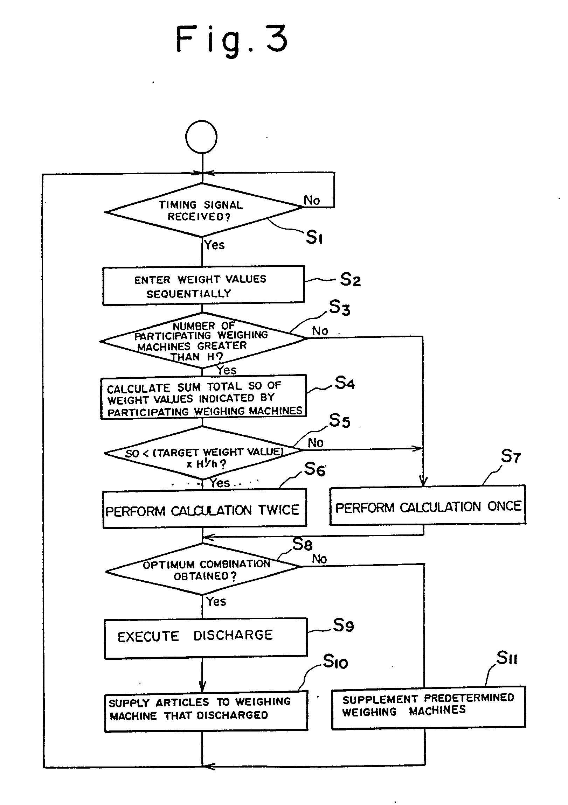

The operation of an apparatus embodying the aforesaid second aspect of the present invention will now be described with reference to Figure 1 and the flowchart of Figure 3.

(1) Step S1 of the flowchart calls for the calculation and control unit 4 to start the processing after checking that the packing machine has produced a timing signal. The program then proceeds to a step S2, at which weight data items from the weighing machines 1-1, 1-2,... 1-n enter the calculation and control unit 4 in succession.

(2) Next, at a step S3, the calculation and control unit 4 checks whether the number of weighing machines available to participate in the current combinatorial weighing process is greater than a preselected number H. If this condition is not satisfied, then the program proceeds to a step S7, described below. As to the value of H, assume that the complete combinatorial weighing apparatus has a set of 14 weighing machines. Some of these weighing machines may not be available to participate in the current weighing cycle, just beginning, for reasons such as zero-point adjustment, etc. If the number of such weighing machines is two, this number is subtracted from 14 to arrive at 12, which is accordingly the number (H') of machines available to participate in the current cycle of combinatorial calculations. In such a case the calculation and control unit 4 determines at the step S3 whether the available number 12 (H') exceeds the preselected minimum number H..

(3) Next, the calculation and control unit 4 calculates at a step S4 the overall sum total (So) of the weight values indicated by the weighing machines available to participate in the current combinatorial calculations.

(4) The program then moves to a step S5, where the calculation and control unit 4 compares the calculated overall sum total So with a predetermined multiple of the desired final batch weight value Wa. For example, the desired batch weight may be multiplied by H'/h, where H' is the number of weighing machines currently available to participate in the combinatorial calculations, and h is a preselected arbitrary number, and the calculation and control unit 4 then determines whether the following condition is satisfied:

So < desired batch weight x H'/h... (a).

By way of example, h may be selected so that the value of H'/h is normally two.

(5) If the decision at the step S5 is affirmative, indicating that condition (a) is satisfied, the program proceeds to a step S6, at which the calculation and control unit 4 performs a combinatorial calculation cycle twice. Thus, by way of example, if the target weight value Wa is 1 Kg, H'/h is 2, and So is found to be less than 2 Kg at the step S5, this indicates that each weighing machine has been supplied with too few articles for efficient single cycle operation. In such a case, the calculation and control unit 4 selects just two-thirds of the number H' of weighing machines presently available to participate in combinatorial calculations and, using the weight values from these 2H'/3 weighing machines, executes a first combinatorial calculation cycle based on a target weight value which is approximately half the desired final batch weight. Having selected an acceptable combination, however, the calculation and control unit 4 does not yet cause the weighing machines of this initially-selected combination to discharge their articles. Next, the calculation and control unit 4 calculates a second target weight value, by subtracting from the desired final batch weight the sum total of the weight values from the machines of the initially selected combination, and performs a second combinatorial calculation cycle using only the weight values from the non-selected weighing machines, not belonging to the initially-selected combination, including the available weighing machines which did not figure in the first combinatorial calculation. This second cycle, based on the said second target weight value, serves to select a combination of machines giving an acceptable ("optimum") combination of weight values with respect to the second target weight value, providing such a combination exists. This is step S8 of the flowchart.

(6) If an acceptable combination is found at the step S8, the program proceeds to a step S9, at which the calculation and control unit 4 causes the weighing machines of the combinations selected respectively in the first and second calculation cycles to discharge their articles simultaneously, More specifically, the number of each machine selected by the first calculation cycle and the weight value from each such machine are stored in memory, and the batch of articles eventually discharged together will have a weight in conformity with the desired final batch weight, namely a weight which is the sum total of the articles from the weighing machines selected by the second calculation cycle together with those from the machines of the initially-selected combination.

If, on the other hand, the condition (a) is not satisfied, then the program proceeds from the step S5 to the step S7. The fact that (a) is not satisfied, the weight total So being more than twice the desired batch weight (when H'/h is set to 2), indicates that the quantity of articles supplied per weighing machine is relatively large. Accordingly, the calculation and control unit 4, at the steps S7 through S9, causes articles to be discharged as a result of just a single combinatorial calculation cycle. It should be noted that the number of weighing machines made to participate in the combinatorial weighing cycle in this case can be made H' × 2/3 to reduce the number of combinations and thereby raise the speed of the weighing operation.

(7) Next, at a step S10, the calculation and control unit 4 causes the weighing machines that have discharged their articles to be supplied with articles anew, after which processing returns to the step S1.

(8) If the decision rendered at the step S8 is that an acceptable combination has not been found, then the program proceeds to a step S11, at which the calculation and control unit 4 supplies prescribed weighing machines, e.g. weighing machines indicating weight values less than a predetermined percentage of the current target weight value, with additional articles. Processing then returns to the step S1.

According to the embodiment of Figure 3, the calculation and control unit 4 performs two combinatorial calculation cycles at the step S6. However, the calculation and control unit 4 can in some cases perform more than two combinatorial calculation cycles. When three combinatorial calculation cycles are to be executed, for example, the target weight value of the combinatorial calculation to be executed first is set at one-third of the desired final batch weight value Wa, and the target weight value of each succeeding combinatorial calculation cycle can be calculated on the basis of the difference between the desired final batch weight Wa and the total weight of articles in the weighing machines selected by the last preceding combinatorial calculation cycle.

As many apparently widely different embodiments of the present invention can be made without departing from the spirit and scope thereof, it is to be understood that the invention is not limited to the described specific embodiments thereof except as required by the appended claims.

**Claims**

1. Combinatorial weighing apparatus including a plurality of weighing machines (1-1,..., 1-n), for receiving respective individual quantities of articles to be weighed, and having calculation and control means (4) connected to cooperate with the weighing machines to carry out automatically a combinatorial weighing cycle, for weighing out a desired batch of such articles, which weighing cycle comprises the steps of:

combining weight data items, provided respectively by the weighing machines and indicative of the weights of the individual quantities held respectively in the weighing machines at the start of the cycle, to find the respective total combined weights of articles held by different combinations of the weighing machines; and

ascertaining whether there is one of the said total combined weights that constitutes an acceptable total, within a preselected allowable value range including a preselected target weight, and if so, discharging the articles from the weighing machines of the combination holding the said acceptable total, thereby to provide the desired batch, but if not, causing some of the weighing machines, the respective data items from which indicate that the individual quantities therein are each lower in weight than the individual quantities in the other weighing machines of the plurality, to be supplied with additional articles, and then restarting the weighing cycle;

the apparatus being such that if none of the said total combined weights constitutes such an acceptable total the calculation and control means (4) are caused automatically to compare the overall total weight of the articles, in all the weighing machines of the said plurality, with a predetermined multiple of the said preselected target weight and to decide, in dependence on the result of this comparison, the number of machines to be supplied with the additional articles prior to the restarting of the weighing cycle.

2. Apparatus as claimed in claim 1, wherein the calculation and control means (4) are such that when the said comparison reveals that the said overall total is greater than the said predetermined multiple of the preselected target weight the additional articles are supplied only to a preset number of machines holding the lowest-weight individual quantities of articles.

3. Apparatus as claimed in claim 1 or 2, wherein the calculation and control means (4) are such that when the said comparison reveals that the said overall total is less than the said predetermined multiple of the preselected target weight the additional articles are supplied to every one of the machines whose individual quantity of articles is smaller in weight than a preselected reference weight value.

4. Combinatorial weighing apparatus including a plurality of weighing machines (1-1,..., 1-n), for receiving respective individual quantities of articles to be weighed, and having calculation and control means (4) connected to cooperate with the weighing machines to carry out automatically a weighing process, involving one or more combinatorial calculation cycles, for weighing out a batch of such articles of a total weight equal or close to a preselected desired weight, the or each such calculation cycle comprising the steps of:

combining weight data items, provided respectively by weighing machines of the said plurality and indicative of the weights of the individual quantities held respectively in those weighing machines at the start of the cycle, to find the respective total combined weights of articles held by different combinations of the weighing machines; and

if one of the said total combined weights constitutes an acceptable total, within a preselected allowable value range including a preset target weight, identifying the combination of machines holding that total, the contents of which machines are to be discharged to form at least part of the said batch;

the apparatus being such that the calculation and control means (4) are caused automatically at the commencement of the said weighing process to compare the overall total weight of the articles, in all the weighing machines of the said plurality, with a predetermined multiple of the said preselected desired weight and then to decide, in dependence on the result of this comparison, how many such calculation cycles are to be included in the complete weighing process.

5. Apparatus as claimed in claim 4, such that when the said comparison reveals that the said overall total (So) is greater than the said predetermined multiple of the preselected desired weight the control means decides that only one such calculation cycle is to be included in the complete weighing process.

6. Apparatus as claimed in claim 4 or 5, such that when the said comparison reveals that the said overall total is less than the said predetermined multiple of the preselected desired weight the control means decides that a plurality of such calculation cycles are to be included in the complete weighing process.

7. Apparatus as claimed in claim 4 or 5, such that when the said comparison reveals that the said overall total is less than the said predetermined multiple of the preselected desired weight the control means decides that just two such calculation cycles are to be included in the complete weighing process.

8. Apparatus as claimed in claim 4, 5, 6 or 7, such that when the decided number of such calculation cycles is two the target weight for the first cycle is set equal to substantially one-half of the preselected desired batch weight, the target weight for the second cycle is set equal to the difference between the preselected desired batch weight and the actual combined total weight of the articles of the said acceptable combination identified in the first cycle, and the weighing machines of that acceptable combination are excluded from participation in the second calculation cycle.

9. Apparatus as claimed in claim 8, such that the articles in the weighing machines of the acceptable combination identified in the first calculation cycle are discharged simultaneously with those in the machines of the acceptable combination identified in the second calculation cycle, thereby to provide the desired batch.

10. Apparatus as claimed in any one of claims 4 to 9, such that if none of the said total combined weights found in one such calculation cycle is within the preselected allowable value range the calculation and control means (4) call for some of the weighing machines, the respective data items from which indicate that the individual quantities therein are each lower in weight than the individual quantities in the other weighing machines participating in that one cycle, to be supplied with additional articles and then cause the said one cycle to be restarted.

11. Apparatus as claimed in any one of claims 4 to 10, including a set of such weighing machines, some of which may from time to time be rendered inoperative so as to be excluded temporarily from inclusion in the said plurality of machines, the apparatus being such that at the start of the weighing process the calculation and control means (4) ascertain whether the number of weighing machines available for inclusion in the said plurality is greater than a preset minimum number and, if not, omits the comparison between the said overall total weight and the predetermined multiple of the said preselected desired weight and causes just a single such calculation cycle to be carried out, using the said preselected desired weight as the said preset target weight.

12. A combinatorial weighing method, of weighing out a desired batch of articles, carried out by means of an apparatus as claimed in any preceding claim.

**Patentansprüche**

1. Kombinatorische Wägevorrichtung mit einer Mehrzahl von Wägemaschinen (1-1,,,,,1-n) zum Aufnehmen jeweiliger individueller Mengen von zu wägenden Artikeln, und mit Rechen- und Steuermitteln (4), welche zum Zusammenwirken mit den Wägemaschinen geschaltet sind, um automatisch einen kombinatorischen Wägezyklus zum Auswägen einer gewünschten Artikecharge durchzuführen, wobei der Wägezyklus die folgenden Schritte umfaßt:

Kombinieren von Gewichtsdatenelementen, welche jeweils von den Wägemaschinen geliefert werden und die Gewichte der jeweils zu Beginn des Zyklus in den Wägemaschinen enthaltenen individuellen Mengen angeben, um die jeweiligen kombinierten Gesamtgewichte der in unterschiedlichen Kombinationen der Wägemaschinen enthaltenen Artikel zu ermitteln; und

Feststellen ob einer der kombinierten Gesamtgewichtswerte, die eine akzeptable Gesamtsumme bilden, innerhalb eines vorgewählten zulässigen Wertbereichs, der ein vorgewähltes Zielgewicht einschließt, vorhanden ist, und, wenn dies der Fall ist, Ausgeben der Artikel aus den Wägemaschinen der die akzeptable Gesamtsumme enthaltenden Kombination, um so die gewünschte Charge zu erstellen, jedoch, wenn dies nicht der Fall ist, Veranlassen der Beschickung einiger der Wägemaschinen, deren jeweilige Datenelemente angeben, daß jede der darin enthaltenen individuellen Mengen ein geringeres Gewicht hat, als die individuellen Mengen in den anderen Wägemaschinen der Mehrzahl, mit zusätzlichen Artikeln und Neubeginnen des Wägezyklus;

wobei die Vorrichtung so ausgebildet ist, daß, wenn keines der kombinierten Gesamtgewichte eine akzeptable Gesamtsumme bildet, die Rechenund Steuermittel (4) automatisch veranlaßt werden, das allgemeine Gesamtgewicht der Artikel in allen Wägemaschinen der Mehrzahl mit einem vorbestimmten Vielfachen des vorgewählten Zielgewichtes zu vergleichen und in Abhängigkeit von dem Ergebnis dieses Vergleichs über die Anzahl der vor dem Neubeginn des Wägezyklus mit den zusätzlichen Artikeln zu beschickenden Maschinen zu entscheiden.

2. Vorrichtung nach Anspruch 1, bei der die Rechenund Steuermittel (4) derart ausgebildet sind, daß, wenn der Vergleich ergibt, daß die allgemeine Gesamtsumme größer als das vorbestimmte Vielfache des vorgewählten Zielgewichtes ist, die zusätzlichen Artikel nur einer voreingestellten Anzahl von Wägemaschinen zugeführt werden, welche die individuellen Artikelmengen mit dem geringsten Gewicht enthalten.

3. Vorrichtung nach Anspruch 1 oder 2, bei der die Rechen- und Steuermittel (4) derart ausgebildet sind, daß, wenn der Vergleich ergibt, daß die allgemeine Gesamtsumme kleiner als das vorbestimmte Vielfache des vorgewählten Zielgewichtes ist, die zusätzlichen Artikel jeder der Wägemaschinen zugeführt werden, deren individuelle Artikelmengen ein Gewicht aufweisen das niedriger als ein vorgewählter Bezugsgewichtswert ist.

4. Kombinatorische Wägevorrichtung mit einer Mehrzahl von Wägemaschinen (1-1,,,,,1-n) zum Aufnehmen jeweiliger individueller Mengen von zu wägenden Artikeln,

und mit Rechen-und Steuermitteln (4), welche zum Zusammenwirken mit den Wägemaschinen geschaltet sind, um automatisch einen Wägevorgang, der einen oder mehrere kombinatorische Rechenzyklen umfaßt, zum Auswägen einer Charge solcher Artikel mit einem Gesamtgewicht durchzuführen, das einem vorgewählten gewünschten Wert gleich oder nahe ist, wobei der oder jeder Rechenzyklus die folgenden Schritte umfaßt:

Kombinieren von Gewichtsdatenelementen, welche jeweils von den Wägemaschinen der Mehrzahl geliefert werden und die Gewichte der jeweils zu Beginn des Zyklus in den Wägemaschinen enthaltenen individuellen Mengen angeben, um die jeweiligen kombinierten Gesamtgewichte der in unterschiedlichen Kombinationen der Wägemaschinen enthaltenen Artikel zu ermitteln; und

wenn eines der kombinierten Gesamtgewichte innerhalb eines vorgewählten zulässigen Wertbereiches, der ein voreingestelltes Zielgewicht beinhaltet, eine akzeptable Gesamtsumme bildet, Identifizieren der diese Gesamtsumme enthaltenden Kombination von Maschinen, deren Inhalt zur Bildung wenigstens eines Teiles der Charge ausgegeben werden soll;

wobei die Vorrichtung so ausgebildet ist, daß die Rechen- und Steuermittel (4) zu Beginn des Wägevorgangs automatisch veranlaßt werden, das allgemeine Gesamtgewicht der Artikel in allen Wägemaschinen der Mehrzahl mit einem vorbestimmten Vielfachen des vorgewählten gewünschten Zielgewichtes zu vergleichen und danach in Abhängigkeit von dem Ergebnis dieses Vergleichs zu entscheiden, wie viele solcher Rechenzyklen in dem gesamten Wägevorgang enthalten sein sollen.

5. Vorrichtung nach Anspruch 4, die so ausgebildet ist, daß, wenn der Vergleich ergibt, daß die allgemeine Gesamtsumme (So) größer als das vorbestimmte Vielfache des vorgewählten gewünschten Gewichts ist, das Steuermittel entscheidet, daß nur ein solcher Rechenzyklus in dem gesamten Wägezyklus enthalten sein soll.

6. Vorrichtung nach Anspruch 4 oder 5, die so ausgebildet ist, daß, wenn der Vergleich ergibt, daß die allgemeine Gesamtsumme kleiner als das vorbestimmte Vielfache des vorgewählten gewünschten Gewichts ist, das Steuermittel entscheidet, daß eine Mehrzahl solcher Rechenzyklen in dem gesamten Wägezyklus enthalten sein soll.

7. Vorrichtung nach Anspruch 4 oder 5, die so ausgebildet ist, daß, wenn der Vergleich ergibt, daß die allgemeine Gesamtsumme kleiner als das vorbestimmte Vielfache des vorgewählten gewünschten Gewichts ist, das Steuermittel entscheidet, daß genau zwei solcher Rechenzyklen in dem gesamten Wägezyklus enthalten sein sollen.

8. Vorrichtung nach Anspruch 4, 5, 6 oder 7, die so ausgebildet ist, daß, wenn die entschiedene Anzahl solcher Rechenzyklen zwei ist, das Zielgewicht für den ersten Zyklus im wesentlichen auf die Hälfte des vorgewählten gewünschten Chargengewichtes eingestellt wird, das Zielgewicht für den zweiten Zyklus gleich der Differenz zwischen dem vorgewählten gewünschten Chargengewicht und dem tatsächlichen kombinierten Gesamtgewicht der Artikel der in dem ersten Zyklus identifizierten akzeptablen Kombination eingestellt wird, und die Wägemaschinen dieser akzeptablen Kombination von der Teilnahme an dem zweiten Rechenzyklus ausgeschlossen werden.

9. Vorrichtung nach Anspruch 8, die derart ausgebildet ist, daß die in den Wägemaschinen der in dem ersten Rechenzyklus identifizierten akzeptablen Kombination enthaltenen Artikel gleichzeitig mit den Artikeln in den Maschinen der in dem zweiten Rechenzyklus identifizierten akzeptablen Kombination ausgegeben werden, um so die gewünschte Charge zu erstellen.

10. Vorrichtung nach einem der Ansprüche 4 bis 9, die derart ausgebildet ist, daß, wenn keiner der in einem solchen Rechenzyklus gefundenen kombinierten Gesamtgewichtswerte innerhalb eines vorgewählten zulässigen Wertbereichs liegt, die Rechen- und Steuermittel (4) veranlassen, daß einige der Wägemaschinen, deren jeweilige Datenelemente angeben, daß jede der darin enthaltenen individuellen Mengen ein geringeres Gewicht hat, als die individuellen Mengen in den anderen an dem einen Zyklus beteiligten Wägemaschinen, mit zusätzlichen Artikeln beschickt werden und danach den Neubeginn des genannten einen Zyklus veranlassen.

11. Vorrichtung nach einem der Ansprüche 4 bis 10, mit einer Gruppe solcher Wägemaschinen von denen einige von Zeit zu Zeit außer Betrieb gesetzt werden können, so daß sie zeitweilig vom Einschluß in die Mehrzahl der Maschinen ausgeschlossen werden, wobei die Vorrichtung so ausgebildet ist, daß die Rechen- und Steuermittel (4) zu Beginn des Wägevorgangs feststellen, ob die Anzahl der für den Einschluß in die genannte Mehrzahl verfügbaren Wägemaschinen größer als eine voreingestellte minimale Anzahl ist, und, wenn dies nicht der Fall ist, den Vergleich zwischen dem allgemeinen Gesamtgewicht und dem vorbestimmten Vielfachen des vorgewählten gewünschten Gewicht entfallen lassen und veranlassen, daß genau ein solcher Rechenzyklus durchgeführt wird, wobei das vorgewählte gewünschte Gewicht als das voreingestellte Zielgewicht verwendet wird.

12. Kombinatorisches Wägeverfahren zum Auswägen einer gewünschten Artikelcharge, das mittels einer Vorrichtung nach einem der vorhergehenden Ansprüche durchgeführt wird.

**Revendications**

1. Appareil de pesage combinatoire comprenant une pluralité de machines de pesage (1-1,..., 1-n), pour recevoir des quantités individuelles respectives d'articles à peser, et comportant des moyens (4) de calcul et de commande connectés de manière à coopérer avec les machines de pesage pour effectuer automatiquement un cycle de pesage combinatoire, afin de Peser un lot désiré de tels articles, ce cycle de pesage comprenant les étapes consistant:

à combiner des éléments de données de poids, fournis respectivement par les machines de pesage et indicatifs des poids des quantités individuelles contenues respectivement dans les machines de pesage au début du cycle, pour trouver les poids combinés totaux respectifs des articles contenus dans différentes combinaisons des machines de pesage; et

à s'assurer si oui ou non un desdits poids combinés totaux constitue un total acceptable, à l'intérieur d'une plage de valeurs admissible présélectionne comprenant un poids visé présélectionné, et si oui à décharger les articles des machines de pesage de la combinaison contenant ledit total acceptable, de manière à fournir ainsi le lot désiré, mais si non, à faire en sorte que certaines des machines de pesage, dont les éléments de données respectifs indiquent que les quantités individuelles qui s'y trouvent ont chacune un poids inférieur aux quantités individuelles des autres machines de pesage de la pluralité, soient approvisionnées en articles supplémentaires, et à redémarrer ensuite le cycle de pesage;

l'appareil étant tel que si aucun des poids combinés totaux ne constitue un tel total acceptable, les moyens (4) de calcul et de commande sont amenés automatiquement à comparer le poids total général des articles, dans toutes les machines de pesage de ladite pluralité, avec un multiple prédéterminé dudit poids visé présélectionné et à décider, en fonction du résultat de cette comparaison, le nombre des machines devant être approvisionnées avec des articles supplémentaires avant le redémarrage du cycle de pesage.

2. Appareil selon la revendication 1, dans lequel les moyens (4) de calcul et de commande sont tels que lorsque ladite comparaison révèle que ledit total général est supérieur audit multiple prédéterminé du poids visé présélectionné, les articles supplémentaires ne sont fournis qu'à un nombre prédéterminé de machines contenant les quantités individuelles d'articles présentant le poids le plus faible.

3. Appareil selon la revendication 1 ou 2, dans lequel les moyens (4) de calcul et de commande sont tels que lorsque ladite comparaison révèle que ledit total général est inférieur audit multiple prédéterminé du poids visé présélectionné, les articles supplémentaires ne sont fournis qu'à chacune des machines dont la quantité individuelle d'articles est inférieure en poids à une valeur pondérale de référence présélectionnée.

4. Appareil de pesage combinatoire comprenant une pluralité de machines de pesage (1-1,..., 1-n), pour recevoir des quantités individuelles respectives d'articles à peser, et comportant des moyens (4) de calcul et de commande connectés de manière à coopérer avec les machines de pesage pour effectuer automatiquement une opération de pesage, mettant en jeu un ou plusieurs cycles de calcul combinatoire, pour peser un lot de ces articles dont le poids total est égal ou voisin d'un poids désiré présélectionné, le cycle de calcul ou chaque cycle de calcul comprenant les étapes consistant:

à combiner des éléments de données de poids, fournis respectivement par les machines de pesage de ladite pluralité et indicatifs des poids des quantités individuelles contenues respectivement dans ces machines de pesage au démarrage du cycle, pour trouver les poids combinés totaux respectifs des articles contenus dans différentes combinaisons des machines de pesage; et

si un desdits poids combinés totaux constitue un total acceptable, à l'intérieur d'une plage de valeurs admissible prédéterminée comprenant un poids visé prédéterminé, à identifier la combinaison de machines contenant ce total, le contenu de ces machines devant être déchargé pour former au moins une partie dudit lot;

l'appareil étant tel que les moyens (4) de calcul et de commande sont amenés automatiquement au début de ladite opération de pesage à comparer le poids total général des articles, se trouvant dans toutes les machines de pesage de ladite pluralité, avec un multiple prédéterminé dudit poids désiré présélectionné et à décider ensuite, en fonction du résultat de cette comparaison, combien de ces cycles de calcul doivent être inclus dans l'opération complète de pesage.

5. Appareil selon la revendication 4, tel que lorsque ladite comparaison révèle que ledit total général (So) est supérieur audit multiple prédéterminé du poids désiré présélectionné, le moyen de commande décide qu'un seul cycle de calcul doit être inclus dans l'opération complète de pesage.

6. Appareil selon la revendication 4 ou 5, tel que lorsque ladite comparaison révèle que ledit total général est inférieur audit multiple prédéterminé du poids désiré présélectionné, le moyen de commande décide qu'une pluralité de ces cycles de calcul doit être incluse dans l'opération complète de pesage.

7. Appareil selon la revendication 4 ou 5, tel que lorsque ladite comparaison révèle que ledit total général est inférieur audit multiple prédéterminé du poids désiré présélectionné, le moyen de commande décide que tout juste deux cycles de calcul doivent être inclus dans l'opération complète de pesage.

8. Appareil selon la revendication 4, 5, 6 ou 7, tel que, lorsque le nombre décidé de ces cycles de calcul est deux, le poids visé pour le premier cycle est fixé à une valeur égale à sensiblement la moitié du poids de lot désiré présélectionné, le poids visé pour le second cycle étant fixé à une valeur égale à la différence entre le poids de lot désiré présélectionné et le poids total combiné réel des articles de ladite combinaison acceptable identifiée au cours du premier cycle, et la participation des machines de pesage de cette combinaison acceptable est exclue au cours du second cycle de calcul.

9. Appareil selon la revendication 8, tel que les articles dans les machines de pesage de la combinaison acceptable identifiée au cours du premier cycle de calcul sont déchargés simultanément avec ceux se trouvant dans les machines de la combinaison acceptable identifiée au cours du second cycle de calcul, de manière à fournir ainsi le lot désiré.

10. Appareil selon l'une quelconque des revendications 4 à 9, tel que si aucun desdits poids combinés totaux trouvés au cours d'un de ces cycles de calcul ne se situe à l'intérieur de la plage de valeurs admissible présélectionnée, les moyens (4) de calcul et de commande demandent que certaines des machines de pesage, dont les éléments de données respectifs indiquent que les quantités individuelles qui s'y trouvent sont chacune inférieures en poids aux quantités individuelles se trouvant dans les autres machines de pesage participant à ce cycle, soient approvisionnées avec des articles supplémentaires et provoquent ensuite le redémarrage dudit cycle.

11. Appareil selon l'une quelconque des revendications 4 à 10, comprenant un ensemble de telles machines de pesage, dont certaines peuvent, de temps en temps, être rendues inactives de manière à ne pas être momentanément incluses dans ladite pluralité de machines, l'appareil étant tel que, au début de l'opération de pesage, les moyens (4) de calcul et de commande s'assurent si oui ou non le nombre de machines de pesage disponibles pour être incluses dans ladite pluralité est supérieur à un nombre minimal prédéterminé et, s'il n'en est pas ainsi, omet la comparaison entre ledit poids total général et le multiple prédéterminé dudit poids désiré présélectionné et provoque l'exécution de juste un seul tel cycle de calcul, en utilisant ledit poids désiré présélectionné comme poids visé prédéterminé.

12. Procédé de pesage combinatoire, pour le pesage d'un lot désiré d'articles, effectué au moyen d'un appareil tel que revendiqué dans n'importe quelle revendication précédente.

Fig. 1

Fig.2 (1/3)

P1 — TIMING SIGNAL S1 RECEIVED ? — No / Yes.

P2 — ENTER AND STORE WEIGHT VALUE FROM EACH WEIGHING MACHINE

P3 — WEIGHT EXCESSIVE ? — Yes / No

P4 — DISPLAY NUMBER OF WEIGHING MACHINE INDICATING EXCESS WEIGHT

P5 — STOP

P6 — GREATER-THAN-UPPER-LIMIT FLAG AT H LEVEL ? — Yes / No

P7 — UPPER LIMIT EXCEEDED CONSECUTIVELY T TIMES ? — Yes / No

P8 — DISPLAY ALARM

P9 — STOP

P10 — CHANGE UPPER LIMIT WEIGHT VALUE TO FIXED WEIGHT VALUE

P11 — STORE UPPER LIMIT WEIGHT VALUE IN ERROR MEMORY

P12 — SET GREATER-THAN-UPPER-LIMIT FLAG TO L LEVEL

P13 — CALCULATE AND STORE TOTAL WEIGHT VALUES OF ALL COMBINATIONS

P14 — SET PATTERN COUNTER TO I

P15 — (TOTAL WEIGHT VALUE OF COMBINATION)−(SET TARGET WEIGHT VALUE) = A — A<0 / A≧0

P16 — SET POSITIVE-INDICATING FLAG TO H LEVEL

P21 — INCREMENT PATTERN COUNTER +1

※1  ※2  ※3

2

# Fig. 2 (2/3)

※3   ※2                          ※1

P17

COMPARE A AND VALUE
IN ERROR MEMORY ———— Error Memory Value ≦ A

Error Memory Value > A

SET LESS-THAN-UPPER-LIMIT
FLAG TO H LEVEL — P18

P19

UPDATE VALUE IN ERROR MEMORY WITH VALUE OF
A AND UPDATE PATTERN MEMORY WITH VALUE
IN PATTERN COUNTER

P20

No ── END OF COUNTING BY
PATTERN COUNTER ?

Yes        P22

No ── IS POSITIVE-INDICATING
FLAG AT H LEVEL ?

Yes        P23

No ── IS LESS-THAN-UPPER-LIMIT
FLAG AT H LEVEL ?

Yes

ENTER AND ADD WEIGHTS
OF COMBINATION FOUND — P24

P25

P30 ──── Greater than ── WHAT IS ERROR OF SUM ── Negative ──→ Ⓨ
Upper Limit      OF ADDED WEIGHTS ?

SET GREATER-THAN-UPPER
-LIMIT FLAG TO H LEVEL                0 ~ Upper Limit

DELIVER DISCHARGE SIGNAL
BASED ON COMBINATION FOUND — P26

Ⓨ

※4                               ※5

# Fig. 2 (3/3)

**⁑4**

CALCULATE SUM TOTAL So OF WEIGHT VALUES FROM WEIGHING MACHINES THAT PARTICIPATED IN COMBINATORIAL WEIGHING — P31

$So >$ (SET TARGET WEIGHT VALUE) x 4/3 ? — P32

No → SUPPLEMENT ALL WEIGHING MACHINES INDICATING WEIGHT VALUES LESS THAN PREDETERMINED WEIGHT VALUE — P33

Yes → SUPPLEMENT THREE WEIGHING MACHINES INDICATING LOWEST WEIGHT VALUES — P34

**⁑5**

DELIVER SUPPLY SIGNAL TO WEIGHING MACHINES THAT DISCHARGED — P27

SET POSITIVE-INDICATING FLAG TO L LEVEL — P28

SET LESS-THAN-UPPER-LIMIT FLAG TO L LEVEL — P29

Ⓧ

EP 0 160 511 B1

# Fig. 3

TIMING SIGNAL RECEIVED? — No / Yes — S1

ENTER WEIGHT VALUES SEQUENTIALLY — S2

NUMBER OF PARTICIPATING WEIGHING MACHINES GREATER THAN H? — No / Yes — S3

CALCULATE SUM TOTAL SO OF WEIGHT VALUES INDICATED BY PARTICIPATING WEIGHING MACHINES — S4

SO < (TARGET WEIGHT VALUE) × H'/h ? — No / Yes — S5

PERFORM CALCULATION TWICE — S6

PERFORM CALCULATION ONCE — S7

OPTIMUM COMBINATION OBTAINED? — No / Yes — S8

EXECUTE DISCHARGE — S9

SUPPLY ARTICLES TO WEIGHING MACHINE THAT DISCHARGED — S10

SUPPLEMENT PREDETERMINED WEIGHING MACHINES — S11